# EUROPÄISCHE PATENTANMELDUNG

(11) **EP 0 861 618 A2**
(43) Veröffentlichungstag der Anmeldung: **02.09.1998**
(21) Anmeldenummer: 98101809.6
(22) Anmeldetag: 03.02.1998
(51) Int. Cl.: A47B 13/02, F16B 12/44

(54) **Eckverbindung**

(30) Priorität: 14.02.1997 CH 355/97
(71) Anmelder: Fuchser AG, Maschinen- und Metallbau, 6345 Neuheim (CH)
(72) Erfinder: Fuchser, Fritz, 6345 Neuheim (CH)
(74) Vertreter: Hotz, Klaus, Dipl.-El.-Ing./ETH

(57) **Zusammenfassung**

Eckverbindung, welche je zwei Vertikalträger (**4**) mit einem Horizontalträger (**6**) einer Struktur (**2**) miteinander verbindet. Die Vertikalträger (**4**) und die Horizontalträger (**6**) bestehen aus Profilmaterial mit mindestens zwei Stegen in zwei quer zueinander gerichteten Ebenen; vorzugsweise werden geschlossene quadratische Profile verwendet. Zur Verbindung jedes Horizontalträgers (**6**) mit den angrenzenden Vertikalträgern (**4**) ist eine im Raum des Horizontalträgers (**6**) aufgenommene Stange (**40**) vorgesehen, deren Enden (**41, 41'**) mit Gewinde versehen sind und durch die angrenzenden Wandungen der Vertikalträger (**4**) ragen, wo sie mit einem Gegengewinde (**26, 42, 44**) verschraubt sind.

## Beschreibung

Die Erfindung betrifft eine Eckverbindung nach dem Oberbegriff des Patentanspruchs **1.**

Eckverbindungen dieser Art werden zu verschiedensten Zwecken benötigt. So können sie als Verbindung von Horizontal- und Vertikalträgern benutzt werden, um Trägerstrukturen für Tisch- und Ablageplatten sowie Sitz- und Liegemöbel zu bilden.

Bei bekannten Strukturen dieser Art erfolgt die Verbindung der Horizontal- und Vertikalträger durch Verschweissung. Dies hat den Nachteil, dass die Strukturen in der Werkstatt montiert bzw. verschweisst werden müssen, so dass der Platzbedarf sowohl für ihre Lagerung wie auch für ihren Transport beträchtlich ist. Andere Strukturen bestehen aus miteinander verschraubten Profilen. Solche Strukturen können beim oder vom Endverbraucher montiert werden, so dass man den Nachteil des grossen Platzbedanfs beim Transport und bei der Lagerung vermeidet. Allerdings sind Strukturen dieser Art oft nicht genügend stabil oder so gestaltet, dass eine winkelgenaue Montage kaum möglich ist. Ausserdem ist es in gewissen Bereichen unerwünscht, wenn Schrauben oder andere für die Montage benützte Elemente sichtbar sind. Ein weiterer Nachteil ist darin zu sehen, dass man häufig für verschraubbare Strukturen verschiedener Abmessungen je nach deren Dimensionen eine Vielzahl verschiedener Grundelemente, was wiederum die Lagerhaltung kompliziert und eine nachträgliche Ummontage praktisch verunmöglicht.

Die Aufgabe der Erfindung wird somit darin gesehen, eine Eckverbindung der eingangs genannten Art vorzuschlagen, mit welcher Strukturen hergestellt werden können, die aus einfachem, möglichst für alle Dimensionen gleichem Grundmaterial bestehen, die problemlos montierbar sind und die gleichzeitig höchsten Ansprüchen bezüglich Präzision, Festigkeit, Starrheit und Ästhetik genügen.

Diese Aufgabe wird erfindungsgemäss durch die Merkmale des kennzeichnenden Teils des Patentanspruchs **1** gelöst. Vorteilhafte Weiterbildungen und bevorzugte Ausführungsbeispiele werden durch die abhängigen Patentansprüche definiert.

Die erfindungsdgemässe Struktur besteht somit im wesentlichen aus Vertikalträgern und aus Horizontalträgern, die alle aus Profilabschnitten in der benötigten Länge bestehen, wobei jedes Profil mindestens zwei quer zueinander gerichtete Wandungen besitzt. Die Vertikal- und Horizontalträger folgen sich abwechslungsweise, das heisst, an jedem Vertikalträger sind in mindestens einer Höhe zwei Horizontalträger befestigt, von welcher jeder seinerseits an zwei Vertikalträgern befestigt ist.

Die Vertikal- und Horizontalträger sind gemäss der neuen Eckverbindungen aneinander befestigt. Dazu wird im Raum jedes Horizontalträgers eine Stange angeordnet, welche an ihren beiden Ende mit Gewinde versehen ist. Jede Stange ragt längs aus den offenen Enden des Horizontalträgers und in die an die Horizontalträger grenzenden Vertikalträger, welche zu diesem Zweck an ihren den Horizontalträgern zugewandten Flächen Ausnehmungen besitzen. Die mit Gewinde versehenen Enden der Stange sind im Inneren der Vertikalträger mit komplementären Muttergewinden verschraubt, derart, dass mit präzis vorbearbeiteten Bauteilen und durch genügendes Anziehen der Verschraubung eine starre Verbindung entsteht.

Die Profilabschnitte werden vorzugsweise aus Stangenmaterial abgelängt. Als Profilmaterial können verschiedene Metalle wie Strahl, insbesondere in rostfreier Qualität oder mit einem Schutzanstrich, Aluminium oder Messing gewählt werden. Obwohl im Prinzip Profile in verschiedenen Formen wie beispielsweise T-, Doppel-T- und U-förmige Profile verwendbar sind, ist es sowohl aus Gründen der Festigkeit wie auch der Ästhetik vorzuziehen, geschlossene Profile mit rechteckigem, vorzugsweise quadratischem Querschnitt zu wählen. Bei geschlossenen Querschnitten ist ein Verziehen während der Montage nicht zu befürchten, und die Stangen sowie die Verschraubungen sind von keiner Seite aus sichtbar. Bevorzugt wählt man für die Vertikal- und Horizontalträger das gleiche Profilmaterial.

Bei einer besonders günstigen Ausbildung der Eckverbindung sind die Enden der Stangen mit Aus-sengewinde versehen, während die Gegengewinde Muttergewinde sind; anstelle von Stangen mit gewindeten Enden können auch Gewindestangen verwendet werden.

Vorzugsweise wird für jedes Stangenende im entsprechenden Vertikalträger ein Einsatzteil vorgesehen, das einen mit der Ausnehmung in der entsprechenden Fläche des Vertikalträgers fluchtenden Durchbruch aufweist, das mindestens teilweise an der entsprechenden Fläche des Vertikaträgers anliegt, und das eine quer zur Stangenrichtung verlaufende Anschlagfläche für eine Mutter aufweist. Die Einsatzteile bzw. weiter unten beschriebene Einsätze können aus metallischen Werkstoffen, insbesondere aus Aluminium, oder aus einem geeigneten Kunststoff bestehen.

Bei gewissen Ausbildungsformen der erfindungsgemässen Eckverbindung kann es günstig sein, wenn eines der für eine Stange vorgesehenen Einsatzteile mit dem Muttergewinde versehen ist.

Die beiden in einem Vertikalträger aufgenommenen Einsatzteile, welche verschiedenen Stangen zugeordnet sind, können auch zusammen als einstückiger Einsatz ausgebildet sein.

Jeder Einsatz kann dann ein Muttergewinde für die eine der Stangen und einen Durchbruch für die andere der Stangen aufweisen. Am Stangenende, das in das Muttergewinde eingeschraubt wird, dient eine Stopmutter als Anschlag, während das andere Stangenende längsverschiebbar im Durchbruch aufgenommen ist, wobei das komplementäre Muttergewinde an einer Stellmutter angeordnet ist, welche so angezogen wird, dass die Eckverbindung starr ist. Beim Montieren muss dann die Stopmutter festgehalten werden, während die Stellmutter angezogen wird.

Es ist vorteilhaft, wenn die Aussenkontur des Einsatzes im wesentlichen, und vorzugsweise in einem Eckbereich, mindestens teilweise der Innenkontur der Vertikalstütze entspricht, da dadurch ein Führungs- bzw. Positioniereffekt erreicht wird.

Aus praktischen und ästhetischen Gründen ist es zu empfehlen, die freien Enden der Vertikalträger zu verschliessen bzw. zu überdecken. Zu diesem Zweck können eines der Einsatzteile oder der einstückige Einsatz mit einer Nase versehen werden, welche eine vertikale Ausnehmung aufweist, in der ein Befestigungselement wie ein Stift oder eine Schraube aufgenommen ist, mit dem eine Abdeckplatte befestigt werden kann.

An einem der Einsatzteile, am einstückigen Einsatz oder auf der Abdeckplatte lässt sich, beispielsweise durch Klebung, eine Endplatte befestigen, welche genau dem Profil des Vertikalträgers entspricht. Bevorzugt erfolgt die Befestigung der Horizontalträger am Vertikalträger in einer Höhe, in welcher die Endplatte bündig mit der oberen Aussenfläche der Horizontalträger angeordnet ist. Insbesondere bei Strukturen, welche zur Aufnahme von Glasplatten bestimmt sind, können an dieser Stelle auch Gummipuffer angebracht werden. Um die Stellfläche zu schonen, auf welche die Struktur zu stehen kommt, kann auch am unteren Ende der Vertikalträger eine Endplatte vorgesehen sein. Diese lässt sich, beispielsweise durch Kleben, auf einem Fusseinsatz befestigen, der sich im untersten Bereich des Vertikalträgers befindet. Je nach Stellfläche können auch Kunststoff- oder Filzgleiter befestigt werden.

Zur Führung der Stange im Horizontalträger während und nach der Montage ist es vorteilhaft, ein oder mehrere Führungselemente, vorzugsweise in Plattenform und aus Kunststoff, vorzusehen, deren Aussenkontur im wesentlichen der Innenkontur des Horizontalträgers entspricht, wobei sich diese Führungselemente mindestens teilweise an den Horizontalträgern abstützen. Die Führungselemente weisen einen Durchbruch auf, durch den die Stange ragt.

Um eine präzise Positionierung des Horizontalträgers am Vertikalträger während der Montage zu erleichtern, können im Bereich der Anlagefläche des Horizontalträgers am Vertikalträger nach aussen ragende Noppen oder Rippen vorgesehen sein, deren Hüllkurve der Innenkontur des Horizontalträgers entspricht, so dass sie nach der Montage nicht mehr sichtbar sind.

Es ist ohne weiteres möglich, beispielsweise Strukturen mit drei Vertikalträgern bzw. Strukturen, deren Horizontalträger ein Dreieck bilden, herzustellen Übliche Strukturen bestehen aber aus vier Vertikalträgern und vier ein Rechteck oder Quadrat bildenden Horizontalträgern. Die Horizontalträger - wie auch die Vertikalträger - werden quer zu ihrer Längsrichtung vom Profilmaterial abgetrennt und liegen in der montierten Struktur mit ihren Trennflächen an den Vertikalträgern an. Die zum Äusseren der Struktur gerichteten vertikalen Flächen der Horizontal- und Vertikalträger können sich dabei im wesentlichen in koplanarer Anordnung befinden. Bei einer solchen Ausführung der Struktur wird für die erfindungsgemässe Eckverbindung nicht unbedingt ein Einsatzteil benötigt, wenn die Innenflächen der Vertikalträger genügend genau im Winkel und genügend eben sind. Als Einsatz kann ggfs. eine herkömmliche Unterlagsscheibe oder zur Sicherung der Schraube auch ein federnder Ring verwendet werden. Als einstückige Einsätze eignen sich beispielsweise Hohlprofilabschnitte, deren Aussenkonturen der Innenkontur der Vertikalträger im wesentlichen entspricht, wobei vorzugsweise die Kanten gerundet sind. Eine leichtere Einpassung der Einsätze ist möglich, wenn man dafür nicht geschlossene sondern offene Profile verwendet, beispielsweise quadratische Hohlprofile, denen ein Eckbereich fehlt.

Andere Strukturen sind so aufgebaut, dass die Vertikalträger in 'Übereckstellung' zu den Horizontalträgern angeordnet sind. Die nach aussen gewandte Fläche jedes Vertikalträgers bildet dabei mit den nach aussen gewandten vertikalen Flächen der angrenzenden Horizontalträger einen überstumpfen Winkel. Die Horizontalträger sind an ihren Enden nicht einfach quer zu ihrer Längsrichtung von Profilmaterial abgetrennt, sondern so bearbeitet, dass sie jeweils einen Kantenbereich eines Vertikalträgers umgreifen. Benachbarte Horizontalträger schliessen einen Winkel ein, der im allgemeinen, aber nicht zwingend, ein rechter Winkel ist. Bei einer solchen Struktur sind keine scharfen, nach aussen ragenden Kanten der Vertikalstützen vorhanden, was insbesondere dann günstig ist, wenn die zu tragenden Platten nicht über die Struktur hinausragen. Als Einsatz eignet sich für solche Strukturen beispielsweise ein Teil in Form eines flachen U, dessen Schenkel so abgeschrägt sind, dass sie sich vom Steg zu den freien Enden verjüngen, derart, dass die Innenflächen der Schenkel im montierten Zustand quer zu den Stangen gerichtet sind und die Auflagefläche für die Muttern bilden.

Werden die Strukturen für Tische und Gestelle im Bürobereich verwendet, so lassen sich die Vertikal- und Horizontalträger in einfacher Weise als Kabelkanäle für übliche Geräte wie Telefone, Computer, Schreibmaschinen, Lampen usw. verwenden, indem an geeigneten Stellen Bohrungen vorgenommen werden.

Mit Hilfe der erfindungsgemässen Eckverbindung erhält man Strukturen, die in jeder Dimension mit den gleichen Ausgangsmaterialien herstellbar sind. Die Einsatzteile, Einsätze, Schrauben, Stützelemente, Abdeckplatten und Fusseinsätze müssen nur in einer Grösse und Ausführung vorhanden sein; die Vertikalträger und die Horizontalträger werden, wie schon erwähnt, vom gleichen Profilmaterial abgelängt und die Enden der Horizontalträger ggfs. bearbeitet; die Stangen werden ebenfalls abgelängt und an ihren Enden mit Gewinde versehen, oder es werden geeignet abgelängte Gewindestangen verwendet. Die Gestelle können in situ montiert und auch zerstörungsfrei demontiert werden, was die Lagerhaltung und den Transport, auch bei einem allfälligen Umzug, sehr vereinfacht. Ändern sich die Bedürfnisse oder die Raumverhältnisse der Benutzer, so können unter Verwendung der vorhandenen Bauteile in Kombination mit ergänzenden Bauteilen den neuen Zwecken angepasste Strukturen in neuen Dimensionen zusammengestellt werden. Die fertigen Strukturen sind nicht nur in höchstem Masse starr sondern weisen auch exakt horizontal verlaufende Horizontalträger und genau rechtwinklig dazu stehende Vertikalträger auf.

Weitere Eigenschaften und Vorteile der erfindungsgemässen Eckverbindung werden im folgenden anhand eines Ausführungsbeispiels und mit Bezug auf die Zeichnung ausführlich beschrieben. Darin zeigt:
- **Fig. 1**: eine erste Ausführungsform einer Struktur mit Horizontalträgern, die ein Quadrat bilden, und mit Vertikalträgern in Übereckstellung;
- **Fig. 2**: eine Ecke der in **Fig. 1** dargestellten Struktur, in einem Vertikalschnitt;
- **Fig. 3**: die in **Fig. 2** dargestellte Ecke in einem weiteren Vertikalschnitt, der quer zum Vertikalschnitt gemäss **Fig. 2** liegt;
- **Fig. 4**: einen Einsatz, in einer seitlichen Ansicht;
- **Fig. 5**: den in **Fig. 4** dargestellten Einsatz, in einem Schnitt längs der Linie A-A in **Fig. 4**;
- **Fig. 6**: den in den **Fig. 5** und **6** dargestellten Einsatz, in einer Ansicht von oben, teilweise geschnitten;
- **Fig. 7**: ein Führungselement, in einer seitlichen Ansicht;
- **Fig. 8**: das in **Fig. 7** dargestellte Führungselement, in einer Ansicht von oben, teilweise geschnitten;
- **Fig. 9**: eine Abdeckplatte, in einer Ansicht von oben;
- **Fig. 10**: die in **Fig. 9** dargestellte Abdeckplatte, in einer seitlichen Ansicht, teilweise geschnitten;
- **Fig. 11**: eine Endplatte, in einer Ansicht von oben bzw. unten;
- **Fig. 12**: einen Vertikalträger, liegend angeordnet, in einer seitlichen Ansicht, zum Teil geschnitten;
- **Fig. 13**: den in **Fig. 12** dargestellten Vertikalträger, in einer Ansicht von oben;
- **Fig. 14**: einen weiteren Einsatz;
- **Fig. 15**: eine Ecke einer weiteren Struktur, mit einem ersten Einsatz; und
- **Fig. 16**: die in **Fig. 14** dargestellte Ecke, jedoch mit einem anderen Einsatz;

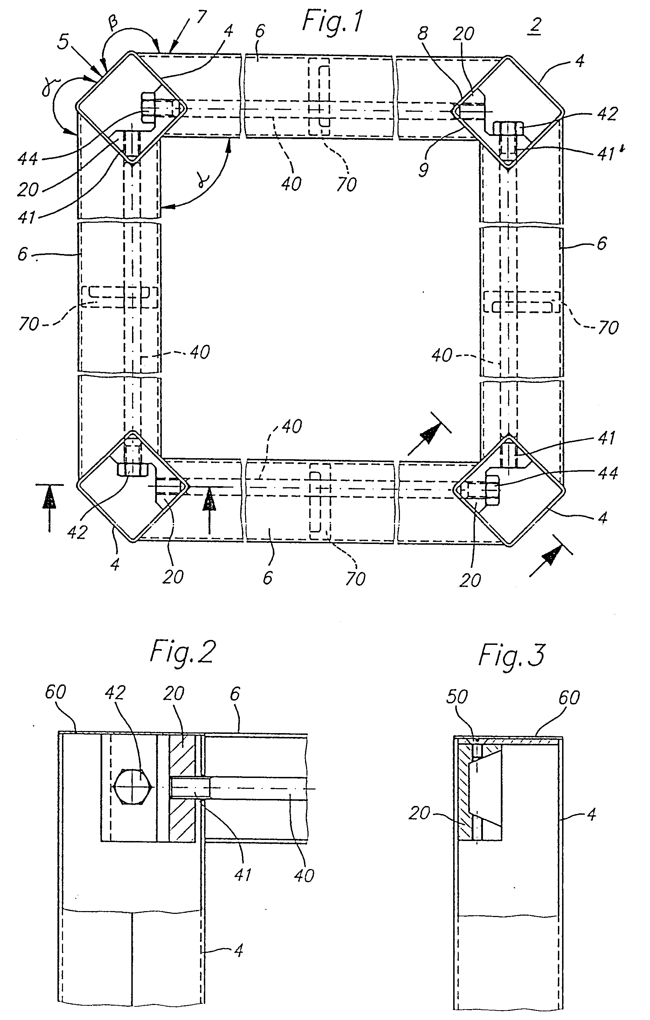

Die in **Fig. 1** dargestellte Struktur **2** weist in ihren vier Ecken vier Vertikalträger **4** auf, deren obere Enden durch vier Horizontalträger **6** verbunden sind. Je zwei benachbarte Horizontalträger **6** schliessen einen Winkel α von 90 grad ein, während die Aussenfläche **5** jeder Vertikalstütze **4** unter überstumpfen Winkeln β und γ von 135° in die Seitenflächen **7** der angrenzenden Horizontalträger **6** übergeht.

Bei Strukturen, die nicht, wie die oben beschriebene, einen rechtwinkligen Rahmen bilden, haben die genannten Winkel entsprechend andere Werte. Durch die Übereck-Anordnung der Vertikalträger **4** relativ zu den Horizontalträgern **6** vermeidet man, dass die Struktur scharf herausspringende 90°-Aussenkanten aufweist.

Sowohl die Vertikalträger **4** als auch die Horizontalträger **6** sind aus einem metallischen Hohlprofilmaterial wie zum Beispiel aus V2A-Stahl gefertigt und beide weisen dasselbe quadratische Profil auf. Die Enden der Horizontalträger **6** sind so bearbeitet, dass sie im montierten Zustand der Struktur **2** die angrenzenden Vertikalträger **4** jeweils von einer Kante aus an zwei Seiten umgreifen.

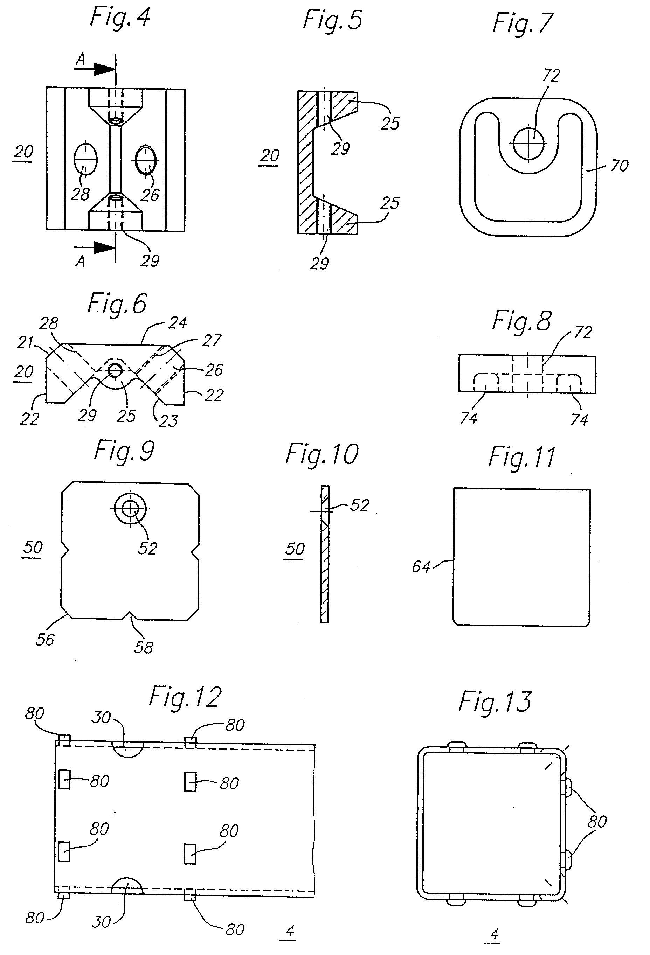

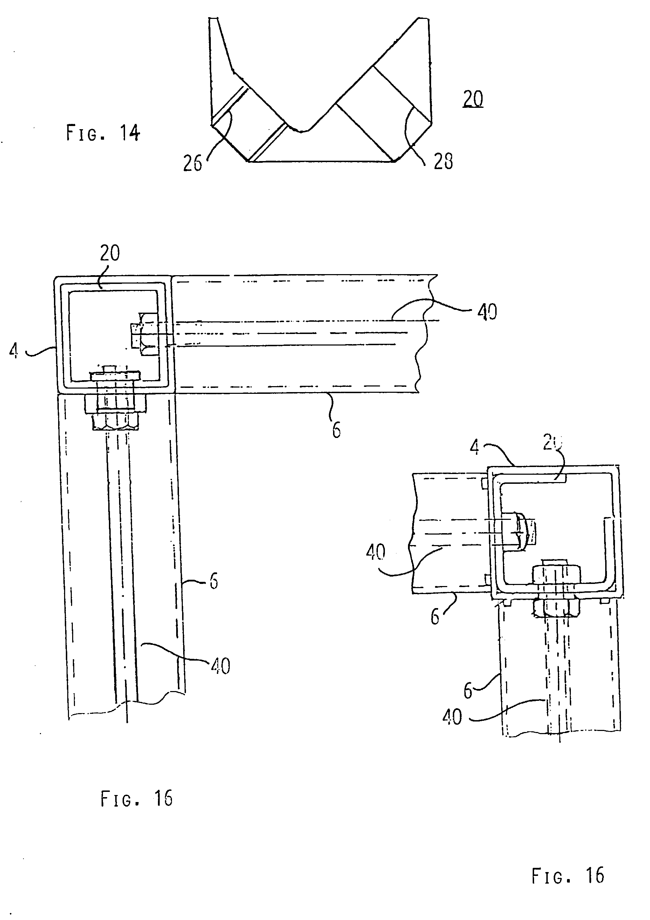

Im oberen Bereich jedes Vertikalträgers **4** befindet sich gemäss den **Fig. 2** und **3** ein Einsatz **20**, der in den **Fig. 4 - 6** genauer dargestellt ist. Ein weiterer Einsatz **20** ist in **Fig. 14** dargestellt. Der Einsatz **20** gemäss **Fig. 4 - 6** weist im Grundriss annähernd die Form eines flachen U auf, dessen Schenkel **22** sich vom Steg **24** zu den freien Enden hin verjüngen, so dass zwei Schrägflächen **23** gebildet werden. Der Einsatz **20** entspricht bezüglich seiner äusseren Kontur teilweise der Innenkontur des Vertikalträgers **4**, und er liegt im montierten Zustand mit seinen entsprechenden Flächen am Vertikalträger **4** an. Die Kanten beim Übergang vom Steg **24** zu den Schenkeln **22** sind abgeschrägt, damit der Einsatz **20** in einfacher Weise und ohne sich zu verklemmen in den Vertikalträger **4** eingeschoben und ggfs. auch wieder aus dem Vertikalträger **4** entnommen werden kann.

Die Neigungen der Schrägflächen **23** sind so gewählt, dass sie im montierten Zustand quer zur den Längsrichtungen der angrenzenden Horizontalträger **6** gerichtet sind.

Der Einsatz **20** weist von seinen abgeschrägten Ecken ausgehende Durchbrüche in Form von Bohrungen **26, 28** auf, die senkrecht zu den Schrägflächen **23** gerichtet sind, und die daher im montierten Zustand in Längsrichtung der jeweils benachbarten Horizontalträger **6** verlaufen. Die Bohrung **26** ist mit einem Innengewinde **27** versehen.

Gemäss den **Fig. 2** und **12** weist jeder Vertikalträger **4** in seinem oberen Endbereich an zwei Kanten Ausnehmungen in Form von Bohrungen **30** auf, welche im montierten Zustand mit den Bohrungen **26** und **28** des Einsatzes **20** fluchten.

Die Befestigung eines Horizontalträgers **6** an den angrenzenden Vertikalträgern **4** erfolgt mit Hilfe einer Stange **40**, die in den **Fig. 1** und **2** sichtbar ist, und deren beide Enden **41**, **41'** mit einem Aussengewinde versehen sind, das dem Muttergewinde **27** des Einsatzes **20** entspricht. Das Ende **41** der Stange **40** ragt durch die Bohrung **30** des Vertikalträgers **4** und ist durch die Bohrung **26** des Einsatzes **20** hindurchgeschraubt. Eine als Stopmutter **42** dienende Mutter ist auf diesem Ende **41** der Stange **40** aufgeschraubt. Die Stopmutter **42** dient dazu, an der Stange **40** einen Anschlag zu bilden, der im montierten Zuistand auf der geeigneten Schrägfläche **23** des Einsatzes **20** aufliegt. Die Stopmutter **42** kann durch eine normale Mutter gebildet sein, welche in einfacher Weise, beispielsweise mittels eines Ringes, bei welchem es sich um einen Dichtungsring handeln kann, so beschaffen ist, dass sie sich auf dem Ende **41** ortsfest positioniert werden kann. Das andere Ende **41'** der Stange **40** ragt durch die Bohrung **30** des benachbarten Vertikalträgers **4** und durch die Bohrung **28** des im Vertikalträgers **4** befindlichen Einsatzes **20**. Da die Bohrung **28** kein Gewinde aufweist, und genügend beabstandet ist, kann sich bei der Montage das Ende **41'** der Stange **41** in Längsrichtung darin frei verschieben, während eine als Stellmutter **44** dienende weitere Mutter auf diesem Ende **41'** aufgeschraubt und so stark angezogen ist, dass eine starre Eckverbindung mit den beiden Horizontalträgern **6** und dem Vertikalträger **4** gebildet wird. Beim Anziehen muss die Stopmutter **42** festgehalten werden. Die übrigen Horizontalträger **6** und Vertikalträger **4** sind mit Hilfe weiterer Einsätze **20,** Stangen **40**, Stopmuttern **42** und Stellmuttern **44** in gleicher Weise montiert, wobei die Gestaltung des Einsatzes **20** mit je einer gewindeten Bohrung **26** und einer ungewindeten Bohrung **28** zu einer einfachen Montage verhilft, indem wenigstens drei der vier Stellmuttern **44** beim Anziehen frei zugänglich sind. Es wäre auch möglich aber weniger praktisch, zwei Typen von Einsätzen zu verwenden, nämlich einen ersten Typ mit zwei gewindeten Bohrungen und einen zweiten Typ mit zwei Durchgangsbohrungen ohne Gewinde.

Gemäss **Fig. 3** werden die nach oben offenen Vertikalträger **4** durch Abdeckplatten **50** mit Bohrungen **52,** dargestellt in den **Fig. 8** und **9**, abgedeckt, wobei die Abdeckplatten **50** in ihrer Form dem Querschnitt der Vertikalträger **4** entsprechen. Zu diesem Zwecke sind die Stege **24** der Einsätze **20** mit Nasen **25** versehen, die ein vertikales Innengewinde enthalten. Die Abdeckplatten **50** werden gemäss **Fig. 3** mit Schrauben **54** an den Einsätzen **20** befestigt. Um die Abdeckplatten **50** sowohl bei der Montage wie auch bei einer allfälligen Demontage einfacher handhaben zu können, weisen sie abgeschrägte Eckpartien **56** und an den Seiten Einkerbungen **58** auf. Endplatten **64**, wie sie in **Fig. 11** dargestellt sind, werden entweder auf den Abdeckplatten **50** oder direkt an den Einsätzen **20** befestigt, was beispielsweise durch Kleben geschehen kann.

Um den Bodenbelag, auf den die Struktur zu stehen kommt, zu schonen, können in nicht dargestellter Weise auch die unteren Enden der Vertikalstützen mit Endplatten versehensein, welche beispielsweise durch Kleben an Fuss-Einsätzen der Vertikalträger befestigt sein können.

Damit die Stangen **40** während der Montage leichter an der richtigen Stelle positioniert und gehalten werden können, sowie um ein Ausbiegen der Stangen **40** zu verhindern, werden Führungselemente in Form von Platten **70** verwendet, die in den **Fig. 7** und **8** dargestellt sind, und die eine Bohrung **72** aufweisen, welche die Stange **40** aufnimmt. Diese Platten **70** sind vorzugsweise aus Kunststoff gefertigt und sind dem Innenprofil der Horizontalträger **6** angepasst. Zur Materialersparnis sind an den Flächen der Platten **70** Ausnehmungen **74** vorgesehen.

Zur Erleichterung der korrekten gegenseitigen Positionierung der Vertikalträger **4** und der Horizontalträger **6** sind gemäss den **Fig. 12** und **13** die Vertikalträger **4** mit nach aussen ragenden Noppen **80** versehen, die so angeordnet sind, dass ihre nicht dargestellte Hüllkurve der Berührungskontur der Innenwandung der Horizontalträger **6** entspricht. Die **Fig. 15 - 16** zeigen eine weitere Ausführungsform der erfindungsgemässen Eckverbindung, wobei aber für entsprechende Bauteile die gleichen Bezugszeichen verwendet werden wie in den **Fig. 1 - 14.**

**Fig. 15** und **Fig. 16** zeigen Ecken von Strukturen **2**, mit einem Vertikalträger **4** und zwei Horizontaltzrägern **6**, die so aneinander befestigt sind, dass die vertikalen Aussenflächen der verschiedenen Träger koplanar angeordnet sind. Im übrigen erfolgt die gegenseitige Befestigung in gleicher Weise wie beim zuerst beschriebenen Ausführungsbeispiel. Als Einsätze **20** dienen entweder annähernd quadratische Hohlprofile gemäss **Fig. 15** oder offene Hohlprofile gemäss **Fig. 16**.

Im Vergleich mit der zuerst beschriebenen Ausführungsform weist diese Ausführungsform den Nachteil auf, dass 90-grad-Kanten der Vertikalträger hinausspringen. Anderseits ist die Herstellung bedeutend einfacher als beim Ausführungsbeispiel gemäss **Fig. 1 - 14** und daher eher für zweckmässige Möbel im Bürobereich geeignet, während Strukturen gemäss **Fig. 14 - 15** eher für Zwecke im Wohnbereich verwendet werden.

Zum Schluss wird ausdrücklich darauf hingewiesen, dass die oben beschriebenen Ausführungsbeispiele lediglich als zwei von zahlreichen möglichen Varianten der Erfindung zu betrachten sind. Insbesondere können beispielsweise zur Herstellung von Gestellen jeweils zwei Vertikalträger durch mehrere Horizontalträger in verschiedenen Höhen verbunden werden, und je nach dem Aufbau der Struktur können die Stangen auch in den Vertikalträgern angeordnet sein.

## Patentansprüche

1. Eckverbindung, insbesondere an Strukturen (**2**) zur Aufnahme von Platten oder Rosten von Möbeln, mit Vertikalträgern (**4**) aus einem Abschnitt eines Profils mit mindestens zwei quer zueinander gerichteten Profilwandungen, wobei jeweils zwei Vertikalträger (**4**) an ihren einen Enden durch einen Horizontalträger (**6**) aus einem weiteren Abschnitt eines Profils mit mindestens zwei quer zueinander gerichteten Profilwandungen verbunden sind,
**dadurch gekennzeichnet,**
dass zur Verbindung jedes Horizontalträgers (**6**) mit den beiden an ihn grenzenden Vertikalträgern (**4**) eine im Raum des Horizontalträgers (**6**) aufgenommene Stange (**40**) angeordnet ist, deren Enden (**41, 41'**) durch an den Seiten der beiden Vertikalträger (**4**) angeordnete Ausnehmungen (**30**) in die Vertikalträger (**4**) ragen, wobei die mit Gewinde versehenen Enden (**41, 41'**) der Stange (**40**) in den Vertikalträgern (**4**) mit Gegengewinden (**42, 44**) verschraubt sind.

2. Eckverbindung nach Patentanspruch **1**,
**dadurch gekennzeichnet,**
dass die Profile (**4, 6**) geschlossene, rechteckige, vorzugsweise quadratische Hohlprofile sind.

3. Eckverbindung nach mindestens einem der vorangehenden Patentansprüche,
**dadurch gekennzeichnet,**
dass die Gewinde (**41, 41'**) an den Enden der Stange (**40**) Aussengewinde und die Gegengewinde (**26, 42, 44**) Muttergewinde sind.

4. Eckverbindung nach mindestens einem der vorangehenden Patentansprüche,
**dadurch gekennzeichnet,**
dass für jedes Ende (**41, 41'**) der Stange (**40**) ein Einsatzteil (**20**) im Vertikalträger (**4**) angeordnet ist, welches einen mit der Ausnehmung (**30**) fluchtenden Durchbruch (**26, 28**) aufweist und mit einer Fläche an der die Ausnehmung aufweisenden Fläche des Vertikalträgers (**4**) anliegt und eine quer zur Stange (**40**) verlaufende Anschlagfläche für eine Mutter (**42, 44**) aufweist.

5. Eckverbindung nach mindestens einem der vorangehenden Patentansprüche,
**dadurch gekennzeichnet,**
dass der Durchbruch (**26**) des Einsatzteils (**20**) mit dem Muttergewinde versehen ist.

6. Eckverbindung nach mindestens einem der vorangehenden Patentansprüche **4**,
**dadurch gekennzeichnet,**
dass die beiden in oder an einem Vertikalträger (**4**) angeordneten und den Stangen (**40**) von dessen benachbarten Horizontalträgern (**6**) zugeordneten Einsatzteile zusammen einen einstückigen Einsatz (**20**) bilden.

7. Eckverbindung nach mindestens einem der vorangehenden Patentansprüche,
**dadurch gekennzeichnet,**
dass jeder Einsatz (**20**) einen Durchbruch (**28**) für das eine an ihm befestigte Ende (**41**) der Stange (**40**) und ein Muttergewinde (**26**) für das andere an ihm befestigte Ende (**41'**) der Stange (**40**) aufweist, derart, dass der am einen Ende (**41**) der Stange (**40**) angeordnete Einsatz (**20**) das Muttergewinde (**26**) aufweist, wobei eine Stopmutter (**42**) einen Anschlag an der Stange (**40**) bildet, und dass der am anderen Ende (**41'**) der Stange (**40**) angeordnete Einsatz (**20**) den Durchbruch (**28**) aufweist, in welchem die Stange (**40**) längenverschiebbar aufgenommen ist, wobei eine Stellmutter (**44**) auf dem Ende (**41'**) der Stange (**40**) eine Mutter festgezogen ist.

8. Eckverbindung nach mindestens einem der vorangehenden Patentansprüche,
**dadurch gekennzeichnet,**
dass die Kontur des Einsatzes (**20**) der Kontur des Vertikalträgers (**4**) entspricht, um den Vertikalträger (**4**) relativ zu den angrenzenden Horizontalträgern (**6**) zu positionieren.

9. Eckverbindung nach mindestens einem der vorangehenden Patentansprüche,
**dadurch gekennzeichnet,**
dass der Einsatz (**20**) eine Nase (**25**) mit einer vertikalen Bohrung (**52**) aufweist, die zur Aufnahme eines Befestigungselementes (**54**) wie einer Schraube oder eines Stiftes dient, mit welchem eine Abdeckplatte (**50**) am Vertikalträger (**4**) befestigt ist.

10. Eckverbindung nach mindestens einem der vorangehenden Patentansprüche,
**dadurch gekennzeichnet,**
dass eine Endplatte (**64**) vorgesehen ist, welche, vorzugsweise durch Klebung, mittelbar an einem Endbereich des Vertikalträgers (**4**) befestigt ist, um eine geschlossene Endfläche zu bilden.

11. Eckverbindung nach mindestens einem der vorangehenden Patentansprüche,
**dadurch gekennzeichnet,**
dass zur Führung der Stange (**40**) am oder im Horizontalträger (**6**) mindestens ein vorzugsweise aus Kunststoff gefertigtes Führungselement (**70**) vorgesehen ist, das eine Ausnehmung (**72**) aufweist, durch welches die Stange (**40**) ragt, und dessen Aussenkontur im wesentlichen der Kontur des Horizontalträgers (**6**) entspricht und das sich an den Wandungen des Horizontalträgers (**6**) abstützt.

12. Eckverbindung nach mindestens einem der vorangehenden Patentansprüche,
**dadurch gekennzeichnet,**
dass der Vertikalträger (**4**) an seiner dem Horizontalträger (**6**) zugewandten Fläche nach aussen ragende Noppen (**80**) und/oder Rippen aufweist, die so angeordnet sind, dass sie mindestens eine Linie definieren, längs welcher die Innenkontur des Horizontalträgers (**6**) am Vertikalträger (**4**) zur Anlage gelangt.

13. Eckverbindung nach mindestens einem der vorangehenden Patentansprüche,
**dadurch gekennzeichnet,**
dass jede der nach aussen gewandten Aussenflächen des Vertikalträgers (**4**) koplanar mit einer vertikalen Aussenfläche des angrenzenden Horizontalträgers (**6**) angeordnet ist.

14. Eckverbindung nach mindestens einem der vorangehenden Patentansprüche,
**dadurch gekennzeichnet,**
dass die Aussenfläche jedes Vertikalträgers (**4**) mit der Aussenfläche jedes angrenzenden Horizontalträgers (**6**) einen überstumpfen Winkel (β, γ) von 135°, einschliesst.
